# EUROPEAN PATENT APPLICATION

(11) **EP 2 099 084 A1**
(43) Date of publication of application: **09.09.2009**
(21) Application number: 08152394.6
(22) Date of filing: 06.03.2008
(51) Int. Cl.: H01M 2/04, H01M 2/30

(54) **Cover for lead acid batteries**

(71) Applicant: Accumalux S.A., 1899 Kockelscheuer (LU)
(72) Inventor: Lange, Wolfgang, 5823 Fentange (LU)
(74) Representative: Kihn, Pierre Emile Joseph

(57) **Abstract**

A cover made of plastic material for a lead acid battery comprising at least one bushing with an annular body having an upper portion and a lower portion, said bushing having an outer surface and an inner surface, the lower portion of the bushing comprising a device on its outer surface for mechanically fixing said bushing to the cover, wherein the outer and the inner surface of the lower portion of the bushing are embedded inside the cover material.

## Description

### Technical field

The present invention relates to a cover for lead acid battery and lead-acid batteries comprising such a cover as well as to the bushings themselves, in particular the invention relates to lead acid batteries having an injection moulded cover with an enhanced seal between the bushing and the cover.

### Background Art

An electric storage battery such as a lead acid storage battery typically comprises a battery case with a rectangular open top case having a plurality of intercell partition walls. A plurality of battery plates are respectively received between the plurality of intercell partition walls for forming a plurality of battery cell. The plurality of battery plates between the plurality of partition intercell walls are interconnected by intercell connectors extending through the intercell partition walls. The intercell connectors connect the plurality of battery plates between the plurality of partition intercell walls in an electrical series configuration.

A positive and negative battery post extends upwardly from the battery plates disposed in the battery cells at opposed ends of the battery case for providing a positive pole at one end of the battery case and a negative pole on the other end of the battery case. The positive and negative battery posts extend above the level of the battery case.

A battery case cover including a positive and negative battery bushing secured to the top of the battery case cover. When the battery case cover is placed over the battery case, the positive and negative battery posts are received within the positive and negative bushings of the battery case cover. The battery case cover is sealed to the battery case as should be well known to those skilled in the art.

The positive and negative battery post and the positive and negative battery bushings are made of a lead material in a lead acid battery. Various methods for electrically connecting the positive and negative battery posts to the positive and negative battery bushings secured to the battery case cover are known in the art. The bushings are bonded to the terminal posts by heating the terminal posts and bushings above the melting point of the bushings but below the melting point of the posts.

Lead-acid cells and batteries include sulphuric acid as an electrolyte. This electrolyte readily wets the surfaces of internal lead components of the battery or cell. Because sulphuric acid has a very low surface tension, it can readily pass through small orifices and cracks. Without an effective seal between the interior of the battery or cell and the ambient atmosphere, sulfuric acid would readily migrate out to the environment, potentially causing corrosion of the terminals or exterior equipment.

Leakage is thus of particular concern at the terminals of the battery or cell. In those cells and batteries, leakage of sulphuric acid may occur in particular at the interface between the bushing and the nonconductive plastic wall if this interface is not properly sealed.

Inasmuch as the conductive bushing and nonconductive substrate are of dissimilar materials, it can be difficult to form an effective seal between the connector and partition wall. It is particularly difficult to form an effective seal between a conductive terminal bushing, which typically is made of lead (or a lead alloy), to a nonconductive substrate, which typically is made of an organic polymer, such as polypropylene.

Sealing between the bushing and the cover is typically accomplished by moulding an annular lead bushing into the cover at each post location. Each bushing surrounds its post and electrical contact is accomplished by fusing each post to its bushing. Today, sealing with moulded-in lead bushings is the most widely used system.

In the prior art, numerous solutions have been proposed to enhance the sealing between the terminal bushing and the cover.

Traditionally, the bushing comprises a multitude of exterior annular groves also called acid rings in the lower portion which is set in the plastic battery cover of the battery to firmly secure the bushing into the cover and to enhance sealing between the cover and the bushing. The exterior annular grooves increase the electrolyte creepage path out of the battery and thus minimize electrolyte leakage.

In order to further enhance the sealing between the bushing and the cover, US 3,992,224 proposes to powder-coat the lead bushings with a polyolefin or a polyolefin-polycarbonate blend to achieve a better contact between the exterior annular grooves of the lead bushing and the cover material.

US 5,709,967 discloses a curable sealant composition for coating a conductive bushing for a lead-acid battery cell or battery to provide a better sealing between the bushing and the cover.

WO90/10954 discloses a battery cell cover including a device for sealing a lead post through the cover, which does not require that the lead bushing be moulded to the cover. The device is in the form of stiff plastic or elastomeric collar, which is adhesively secured to and surrounds the lead post.

A principal drawback in the use of sealants is the higher costs of the sealant material and the additional manufacturing steps required when mounting the battery.

### Technical problem

It is an object of the present invention to provide a cover of a lead acid battery, which diminishes the sulphuric acid leakage between a bushing and the cover without the need an extra sealant material.

### General Description of the Invention

To achieve this object, the present invention proposes a cover made of plastic material for a lead acid battery comprising at least one bushing with an annular body having an upper portion and a lower portion, said bushing having an outer surface and an inner surface, the lower portion of the bushing comprising a device on its outer surface for mechanically fixing said bushing to the cover, wherein the outer and the inner surface of the lower portion of the bushing are embedded inside the cover material.

In the traditional bushings, the bottom surface and the inner side of the bushing are "naked" i.e. exposed to the acid contained in the battery. The acid may therefore creep upwards between the outer surface of the bushing and the cover material through a labyrinth made of a succession of exterior annular grooves before coming into contact with the exterior.

In the present invention however, the lower portion of the bushing is completely immerged or embedded in the cover material. The plastic material of the cover does not only cover the outer surface of the bushing but it goes around the bottom of the lower portion of the bushing and covers the inner side of the lower portion of the bushing as well. Consequently, in the present invention, the lower portion of the bushing is not exposed to the acid contained in the battery at all. The creepage path or labyrinth is thus considerably lengthened and more complex.

An advantage of the present invention is that the bushing can thus be shorter and thus lighter i.e. requiring less lead. It is estimated that the bushings according to the invention require up to 30 % less lead than the traditional bushings. The cover of the present invention is thus less expensive to manufacture while it diminishes the risk of acid leakage considerably.

A further advantage of the present invention is that the lead of the bushing is less exposed to the acid contained in the battery and is thus less exposed to corrosion. Indeed, the outer surface, the bottom surface and the inner side of the lower portion of the bushing are covered by the plastic material of the cover and are thus not exposed to the acid contained in the battery.

In a preferred embodiment, the cover material covers the lower portion of the bushing on its inner surface at least up to the same height as on its outer surface.

Advantageously, the cover material covers the lower portion of the bushing on its inner surface higher than on its outer surface. In other words, the cover material on the inner surface is above the level of the cover material on the outer surface.

In a further embodiment, the inner surface of the upper portion is at least partially covered with cover material. This further lengths the acid creepage path.

The upper portion of said bushing has an inner diameter, which is smaller than the inner diameter of the lower portion to allows room for the cover material between the post and the bushing. The inner diameter of the upper portion of said bushing is preferably between 0.8 and 0.95 times the inner diameter of the lower portion. Preferably, a ridge or a step in the diameter separates the two portions.

The device for mechanically fixing said bushing to the cover comprises preferably at least an annular ridge and at least one annular groove perpendicular to the axis of the bushing so as to form a structure similar to a toothed wheel.

According to another aspect, there is disclosed a battery comprising a cover as described herein above.

According to yet another aspect, there is disclosed a method for manufacturing cover for a lead acid battery as described herein above, wherein said cover is injection melded to the bushing.

Finally, a bushing for a lead acid battery with an annular body, having an upper portion and a lower portion is disclosed. Said bushing comprises an outer surface and an inner surface, the lower portion of the bushing comprising a device on its outer surface for mechanically fixing said bushing to a cover of a lead acid battery. The inner surface of the lower portion of the bushing comprises a annular recess for receiving cover material.

The recess for receiving the cover material comprises a portion having a larger inner diameter than the upper portion, the diameter of the upper portion being adapted to the diameter of the post of the battery, where as the diameter of the lower portion is adapted to receive cover material between the post and the bushing. The difference between the two diameters is preferably between 0.8 mm and 3 mm.

### Brief Description of the Drawings

A preferred embodiment of the invention will now be described, by way of example, with reference to the accompanying drawings in which:
Fig. 1: is a cross-section view of an illustrative prior art bushing for use in a lead acid battery;
Fig. 2: is side elevation view of a battery using a bushing according to the present invention
Fig. 3: is a cross-section view of an illustrative embodiment of a bushing of the present invention for use in a lead acid battery;
Fig. 4: is a cross-section view of a further illustrative embodiment of a bushing of the present invention for use in a lead acid battery
Fig. 5: is a partial enlargement of Fig. 2.

Further details and advantages of the present invention will be apparent from the following detailed description.

### Detailed Description of the Drawings

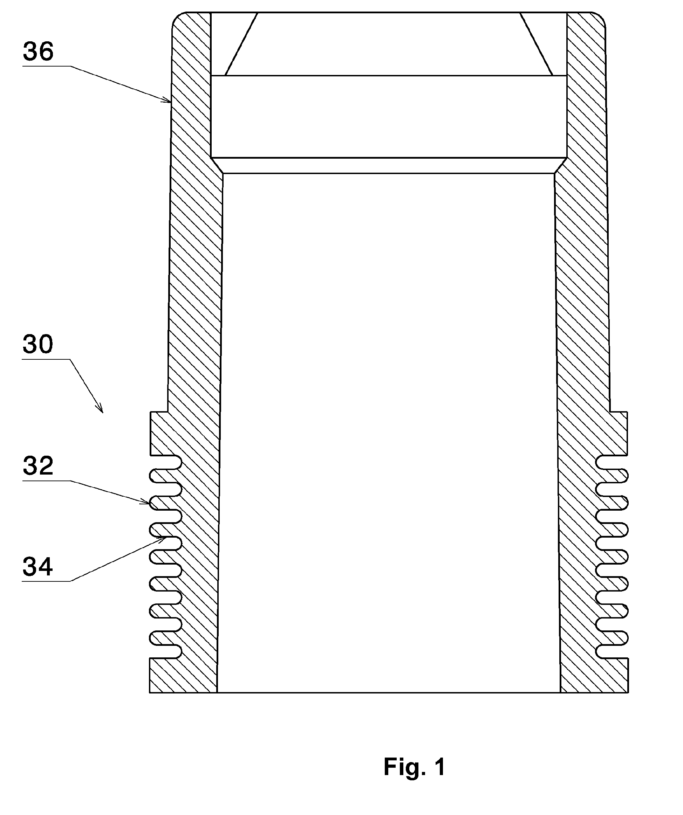

As is shown in FIG. 1 taken from US Patent N° 5,924,471, a prior art bushing 30 comprises an annular body having a lower portion 32 having a series of circumferential acid rings 34 about this lower portion 32. Such acid rings 34 are commonly utilized to enhance sealing between a plastic battery cover and the bushing, as well as to increase the electrolyte creepage path out of the battery so as to minimize electrolyte leakage. The top section 36 of the bushing 30 is a critical area of the bushing 30 since this is the part, in this configuration, which is fused to a post in the terminal cell to form the terminal.

The lead alloys used to form the bushing may be any of those conventionally used for this purpose. Various lead-based alloys with alloying elements such as tin and antimony, for example, are known and may be employed.

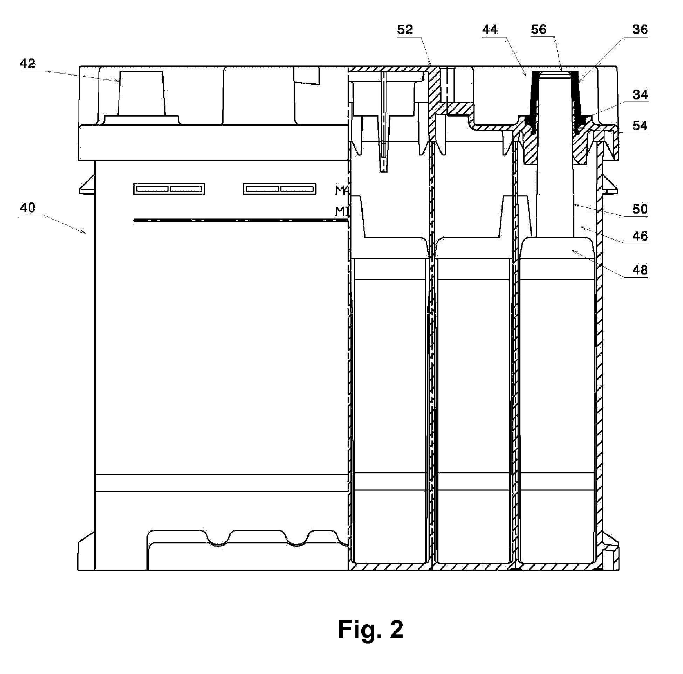

FIG. 2 shows a battery 40 having a positive terminal 42 and a negative terminal shown generally at 44. The negative plates in the terminal cell 46 are connected to the strap 48 and the upstanding post 50.

The bushing 30 is moulded into the cover 52 with a portion extending into the terminal cell 46 and an acid ring 34 being moulded into the cover barrel 54. Upstanding portion 36 of bushing 30 receives post 50.

To form the terminal 44, the upper portion 36 of the bushing 30 is fused to the top part 56 of the post 50. This is accomplished by induction heating or by other means, which cause the respective surfaces to fuse together. Typically, the depth of the fusion only goes down to from about 0.5 to about 1 cm.

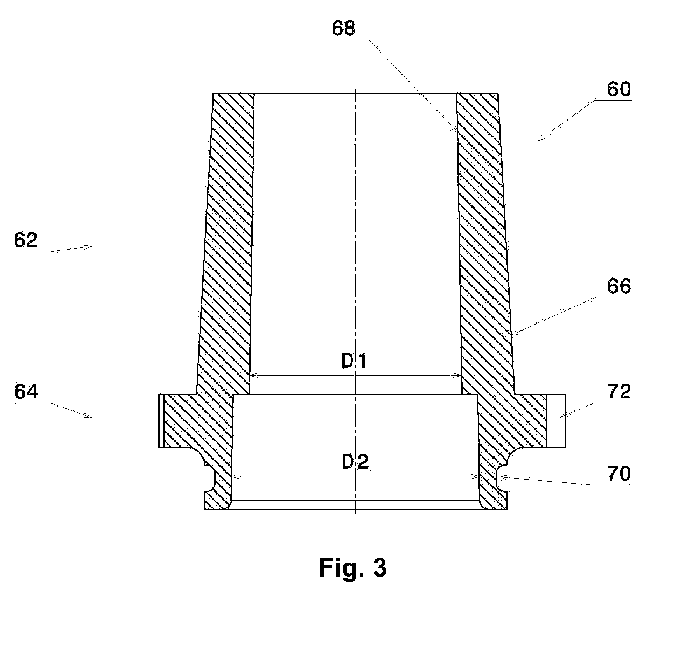

Fig. 3 shows a cross-section view of a first illustrative embodiment of a bushing of the present invention for use in a lead acid battery. The bushing 60 comprises an upper portion 62 and a lower portion 64; an outer surface 66 and an inner surface 68. On the outer surface of the lower portion, the bushing comprises an annular groove or acid ring 70 and a device 72 for mechanically fixing said bushing to the cover. This device is preferably in the form of toothed wheel wherein the teeth are perpendicular to the axes of the bushing.

The upper portion of said bushing has an inner diameter D1, which is adapted in size so as to receive the post. The inner diameter D2 of the lower portion of the bushing is larger than the inner diameter of the upper portion, so as to receive cover material between the inner surface of the bushing and the outer surface of the post.

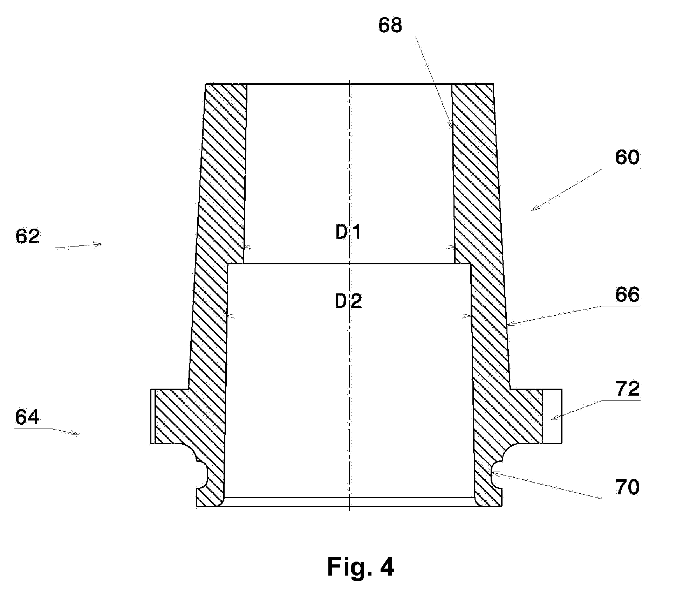

In this particular embodiment, the cover material covers the lower portion up to substantially the same height on the inside as on the outside. In another embodiment, as shown in Fig. 4, the cover material reaches up higher on the inside surface than on the outside surface of the lower portion of the bushing.

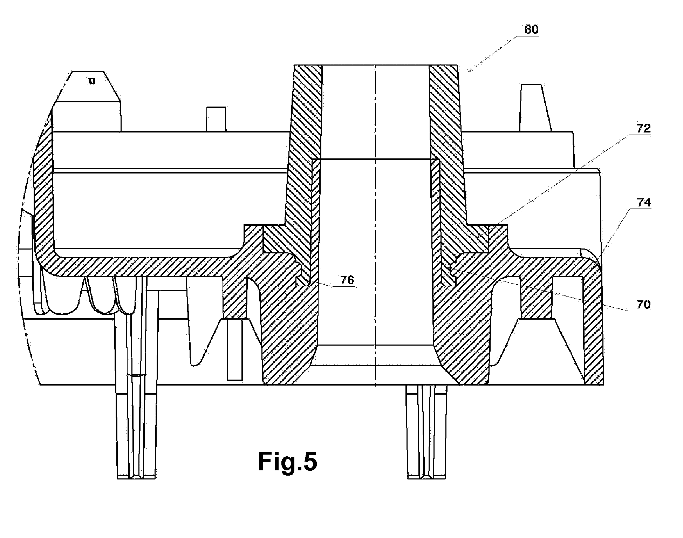

As can be seen in more detail on Fig. 5, the cover material 74 goes around the bottom 76 of the bushing 60 and completely envelops and covers the lower part of the bushing, so that neither the inside surface, nor the outside surface nor the bottom surface of the bushing comes into contact with the acid contained in the battery. This minimizes the corrosion of the bushing due the acid contained in the battery. The bushing is solidly anchored in the cover and is maintained

Furthermore, the fact that the bottom 76 of the lower portion of the bushing is completely immerged in the cover material makes the creepage path of the sulphuric acid much longer and more complex as compared to traditional bushings as e.g. represented on Fig. 1. Indeed, in the bushing 60 according to the invention, the sulphuric acid must first rise upwards between the cover material and the post and then travel downward between the cover material and the bushing and then around the bottom surface before having to travel upward again between the outer surface of the bushing and the cover material.

The creepage path of the sulphuric acid is thus longer and more complex in the bushings according to the invention than in traditional bushings wherein the creepage path is exclusively on the outer surface of the bushing. In order to make the creepage path longer in a traditional bushing, tone has to add further acid rings and thus make the bushing longer and thus more expensive.

The fact that the cover material also covers the inner side of the bushing provides a better and more solid anchorage of the bushing in the cover.

Surprisingly, it has been found that the cover material on the inner side of the bushing does neither melt nor is it damaged during the fusion of the upper part of the post to the upper part of the bushing.

It should be noted that the cover material on the inner side of the lower portion of the bushing must not be very thick. It has been found that a thickness of between 0.4 mm and 1.5 mm is enough.

## Claims

1. A cover made of plastic material for a lead acid battery comprising at least one bushing with an annular body having an upper portion and a lower portion, said bushing having an outer surface and an inner surface, the lower portion of the bushing comprising a device on its outer surface for mechanically fixing said bushing to the cover, wherein the outer and the inner surface of the lower portion of the bushing are embedded inside the cover material.

2. The cover for a lead acid battery according to claim 1, wherein the cover material covers the lower portion of the bushing on its inner surface at least up to the same height as on its outer surface.

3. The cover for a lead acid battery according to claim 1 or 2, wherein the cover material covers the lower portion of the bushing on its inner surface higher than on its outer surface.

4. The cover for a lead acid battery as claimed in any of the claims 1 to 3, wherein the inner surface of the upper portion is at least partially covered with cover material.

5. The cover for a lead acid battery as claimed in any of the claims 1 to 4, wherein the upper portion of said bushing has an inner diameter, which is smaller than the inner diameter of the lower portion, the diameter of the upper portion being adapted to the diameter of the post of the battery, where as the diameter of the lower portion is adapted to receive cover material between the post and the bushing.

6. The cover for a lead acid battery as claimed in any of the claims 1 to 5, wherein the device for mechanically fixing said bushing to the cover comprises at least an annular ridge and at least one annular groove.

7. The cover for a lead acid battery as claimed in any of the claims 1 to 6, wherein inner surface of the bushing comprises an annular ridge.

8. A battery comprising a cover as claimed in any of the claims 1 to 7

9. A method for manufacturing cover for a lead acid battery according to any of the claims 1 to 7, wherein said cover is injection melded to the bushing.

10. A bushing for a lead acid battery with an annular body, having an upper portion and a lower portion, said bushing having an outer surface and an inner surface, the lower portion of the bushing comprising a device on its outer surface for mechanically fixing said bushing to a cover of a lead acid battery, wherein the inner surface of the lower portion of the bushing comprises an annular recess for receiving cover material.

11. A bushing according to claim 10, wherein the recess for receiving the cover material comprises a portion having a larger inner diameter than the upper portion, the diameter of the upper portion being adapted to the diameter of a post of a battery.
